# EUROPÄISCHE PATENTSCHRIFT

(11) **EP 3 530 998 B1**
(45) Veröffentlichungstag und Bekanntmachung des Hinweises auf die Patenterteilung: **23.09.2020**
(21) Anmeldenummer: 18158129.9
(22) Anmeldetag: 22.02.2018
(51) Int. Cl.: F16L 5/02, F16L 5/10, B60R 16/02, H02G 3/22

(54) **VERWENDUNG EINES ELASTOMERSTOPFENS ZUM HINDURCHFÜHREN EINER LEITUNG**
USE OF AN ELASTOMER STOPPER FOR GUIDING A CONDUIT THEREIN
UTILISATION D'UN BOUCHON EN ÉLASTOMÈRE POUR Y GUIDER UNE CONDUITE

(43) Veröffentlichungstag der Anmeldung: 28.08.2019
(73) Patentinhaber: Hauff-Technik GmbH & Co. KG, 89568 Hermaringen (DE)
(72) Erfinder: Kurz, Ralf, 89537 Giengen (DE); Delikostas, Christos, 89537 Giengen (DE)
(74) Vertreter: König Szynka Tilmann von Renesse Patentanwälte Partnerschaft mbB

(56) Entgegenhaltungen:
- EP-A1- 2 390 544
- DE-B3-102012 023 594
- US-A- 5 741 015

## Beschreibung

Die vorliegende Erfindung betrifft die Verwendung eines Stopfens mit einem Loch zum Einsetzen an einer Öffnung und Hindurchführen einer Leitung durch das Loch.

Bei der Öffnung kann es sich bspw. um ein Bohrloch in einer Gebäudewand handeln, die Leitung kann insbesondere ein Glasfaserkabel sein. Dies ist insoweit eine häufige Kombination, als Glasfaserkabel oftmals nachträglich verlegt werden, also nicht bereits beim Bau des Gebäudes bzw. der Herstellung der Wand integriert werden. Dies soll ein bevorzugtes Anwendungsgebiet illustrieren, den Gegenstand aber zunächst nicht in seiner Allgemeinheit beschränken.

Die US 5 741 015 A betrifft eine Elastomerhülse zum Anschließen von Rohren, die mit einem Spannring nach radial außen angedrückt wird.

Die DE 10 2012 023594 B3 zeigt einen aus einer Hart- und einer Weichkomponente gespritzten Stopfen, der in einer Gehäuseöffnung mittels der Hartkomponente verspreizt wird.

Die EP 2 390 544 A1 zeigt ein Dichtmodul mit Einsätzen, die hindurchgeführte Kabel aufnehmen.

Der vorliegenden Erfindung liegt das technische Problem zugrunde, einen besonders vorteilhaften Stopfen anzugeben, der im Zuge der Verwendung in die Öffnung gesetzt und durch den die Leitung hindurchgeführt wird.

Dies wird erfindungsgemäß mit der Verwendung gemäß Anspruch 1 gelöst. Der Stopfen weist ein Dichtelement aus einem Elastomermaterial und ein Stützelement aus einem im Vergleich dazu härteren Stützelementmaterial auf. Ein Hülsenabschnitt des Dichtelements wird in die Öffnung eingesetzt, wobei in diesem Hülsenabschnitt des Dichtelements eine hülsenförmige Stützstruktur des Stützelements angeordnet ist. Die Stützstruktur begrenzt die Verformung des Dichtelements nach radial innen, sodass bspw. für ein nachträgliches Hindurchführen der Leitung ein definiertes Loch mit hinreichender Weite zur Verfügung steht. Es wird also einem übermäßigen Zusammendrücken des Dichtelements beim Einschieben in die Öffnung entgegengewirkt. Auch unabhängig von dem nachträglichen Hindurchführen der Leitung kann dies bspw. einem übermäßigen Druck auf die Leitung vorbeugen, der insbesondere im Falle der Glasfaserkabel leicht zu einer Beschädigung führen kann (Bruch des Glasfaserkerns).

Bevorzugte Ausgestaltungen finden sich in den abhängigen Ansprüchen und der gesamten Beschreibung, wobei die Offenbarung trotz der Verwendungskategorie stets auch auf den Stopfen an sich bzw. eine entsprechende Dichtanordnung (mit in eine Öffnung gesetztem Stopfen und hindurchgeführter Leitung) zu lesen ist.

Die hülsenförmige Stützstruktur ist beim Einsetzen bzw. -schieben des Stopfens in dem Hülsenabschnitt des Dichtelements angeordnet (Dicht- und Stützelement werden gemeinsam eingeschoben), die Stützstruktur drückt dabei das Dichtelement nach radial außen gegen die die Öffnung begrenzende Laibung an. Das weichere Dichtelement legt sich zuverlässig dichtend an, das härtere Stützelement schafft einen hinreichenden Anpressdruck nach außen bzw. begrenzt die Verformung nach innen. Bezüglich möglicher Stützelementmaterialien wird auf die nachstehende Beschreibung verwiesen, das Stützelementmaterial soll jedenfalls härter als das Elastomermaterial sein, also bspw. eine größere Shore-Härte haben. Der Härteunterschied kann dabei mitunter so groß sein, dass die Shore-Härten nicht mehr auf derselben Skala, also mit demselben Indentertyp (spitz oder flach bzw. rund), erfasst werden können.

Das "Elastomermaterial" ist ganz allgemein ein Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer. Das Stützelementmaterial kann bspw. eine Shore-Härte (D) von mindestens 50 Shore, 60 Shore bzw. 70 Shore haben, mit möglichen Obergrenzen bei höchstens 85 Shore bzw. 80 Shore, jedenfalls im Falle von Kunststoff.

Die Angaben "axial", "radial" bzw. "umlaufend", sowie auch die zugehörigen Richtungen (Axial-, Radial- bzw. Umlaufrichtung), beziehen sich auf die Längsachse der Öffnung, in welche der Stopfen eingesetzt wird. Der Stopfen wird axial in diese eingeschoben. Die Öffnung muss senkrecht zu ihrer Längsachse nicht zwingend einen kreisförmigen Querschnitt haben, wenngleich dies bevorzugt ist (siehe unten). Soweit also bspw. auf einen Durchmesser Bezug genommen wird, ist dies im Allgemeinen als Mittelwert aus kleinster und größter Erstreckung in einem zur Längsachse senkrechten Schnitt zu lesen, was im bevorzugten Fall der Kreisgeometrie dem Kreisdurchmesser entspricht. Die die Durchgangsöffnung radial begrenzende Laibung ist um die Längsachse bevorzugt zumindest drehsymmetrisch, insbesondere rotationssymmetrisch.

Die hülsenförmige Stützstruktur muss im Allgemeinen nicht zwingend von einer umlaufend und axial durchgehend geschlossenen Wand gebildet werden, stattdessen ist bspw. auch eine Gitterform denkbar (einem Stent vergleichbar). Bevorzugt hat die Stützstruktur gleichwohl eine umlaufend und axial in sich geschlossene Form, besonders bevorzugt ist eine Stützstruktur mit einer hohlzylindrischen Form.

Der Stopfen weist zumindest ein Loch zum Hindurchführen der Leitung auf, er kann also auch eine Mehrzahl Löcher aufweisen und entsprechend eine Mehrzahl Leitungen gleichzeitig aufnehmen (die den Stopfen dann bevorzugt neben- und parallel zueinander durchsetzen). Die Mehrzahl meint insofern mindestens 2, in der Regel nicht mehr als 10, 8, 6 bzw. 4. "Ein" und "eine" sind generell ohne ausdrücklich gegenteilige Angabe als unbestimmte Artikel zu lesen.

Bei einer bevorzugten Ausführungsform wird zuerst der Stopfen in die Öffnung gesetzt und wird erst danach die Leitung hindurchgeführt. Die Leitung wird also erst dann durch den Stopfen gefädelt, wenn dieser bereits in seiner (endgültigen) Position in der Öffnung sitzt. Dies kann einerseits das Einsetzen des Stopfens vereinfachen, insbesondere ein Einschlagen ermöglichen (siehe unten), weil dann hierbei keine Beschädigung der Leitung zu befürchten ist. Andererseits stellt die Stützstruktur sicher, dass, auch wenn der Stopfen bereits in der Öffnung sitzt, das Dichtelement nicht so stark zusammengedrückt wird, dass keine Leitung mehr hindurchgeführt werden könnte.

In bevorzugter Ausgestaltung wird der Stopfen in die Öffnung eingeschlagen, vorzugsweise mit einem Hammer. Auch insoweit kommt die Stabilisierungsfunktion der Stützstruktur vorteilhaft zu tragen, der Stopfen lässt sich bildlich gesprochen wie ein Nagel handhaben.

In bevorzugter Ausgestaltung hat der Hülsenabschnitt des Dichtelements zumindest abschnittsweise einen Außendurchmesser, der größer als ein Durchmesser der Öffnung ist. Aufgrund der Stützstruktur, deren Außendurchmesser kleiner als der Durchmesser der Öffnung ist, lässt sich der Stopfen gleichwohl einsetzen und kann dann auch noch eine Leitung hindurchgeführt werden. Der größere Außendurchmesser des Hülsenabschnitts kann hinsichtlich eines stabilen Sitzes des Stopfens in der Öffnung von Vorteil sein, also ein unbeabsichtigtes Herausrutschen etc. vermeiden helfen.

Generell kann die Außenwandfläche des Dichtelements in dem Hülsenabschnitt mit einer oder mehreren umlaufenden Erhebungen vorgesehen sein, siehe unten im Detail. In einem Axialschnitt betrachtet kann bzw. können diese Erhöhungen insbesondere ein Sägezahnprofil haben, also eine in Einschieberichtung flache Flanke und entgegengesetzt (Auszugsrichtung) eine steile Flanke. Bevorzugt hat bzw. haben dann zumindest diese Erhebung(en) einen Außendurchmesser, der größer als der Öffnungsdurchmesser ist (dies meint "zumindest abschnittsweise"); es kann aber andererseits auch der Hülsenabschnitt insgesamt, über die gesamte axiale Länge einen entsprechend größeren Außendurchmesser haben.

Bevorzugt haben die Erhebungen axial vom Flansch weg (vom Flansch des Dichtelements und/oder des Stützelements) einen abnehmenden Außendurchmesser. Der Außendurchmesser nimmt also in Einschieberichtung ab, sodass also zunächst die Erhebung mit dem kleinsten Außendurchmesser in die Öffnung eingeschoben wird, und der Außendurchmesser der danach eingeschobenen Erhebung größer ist.

Bei einer bevorzugten Ausführungsform weist das Stützelement einen Flansch auf, der axial an die hülsenförmige Stützstruktur anschließt. Gegenüber der Stützstruktur erstreckt sich dieser Flansch nach radial außen weg, bevorzugt ist er umlaufend in sich geschlossen. Generell beziehen sich die Angaben "nach innen" und "nach außen" im Rahmen dieser Offenbarung ohne ausdrücklich gegenteilige Angabe auf die Längsachse der Öffnung als Zentrum (nach innen meint zu dieser hin, nach außen von dieser weg). Der Flansch kann das Einsetzen des Stopfens vereinfachen, bietet nämlich eine vergrößerte Anlagefläche für ein Eindrücken bzw. Einschlagen. Der Stopfen kann so besonders vorteilhaft mit einem Schlagwerkzeug, insbesondere einem Hammer, in die Öffnung eingetrieben werden. Sitzt der Stopfen dann in seiner Montageposition, ist der Flansch außerhalb der Öffnung angeordnet; er kann insofern auch einen Anschlag für das Einbringen des Stopfens darstellen. Der Flansch hat bevorzugt einen Außendurchmesser, der größer als der Durchmesser der Öffnung ist.

Bevorzugt weist auch das Dichtelement einen Flansch auf, der axial an den Hülsenabschnitt anschließt und sich von diesem nach radial außen weg erstreckt. Bevorzugt ist auch dieser Dichtelement-Flansch umlaufend in sich geschlossen. Besonders bevorzugt reicht der Dichtelement-Flansch nach radial außen weiter als der Stützelement-Flansch, der Dichtelement-Flansch kann den Stützelement-Flansch insbesondere mit einem axial hervortretenden Kragen nach radial außen einfassen. Der Stützelement-Flansch drückt den Dichtelement-Flansch dann zuverlässig in eine Anlage gegen die Wandfläche (die Seitenfläche der Wand), die Öffnung wird gegen einen Feuchteeintritt verschlossen.

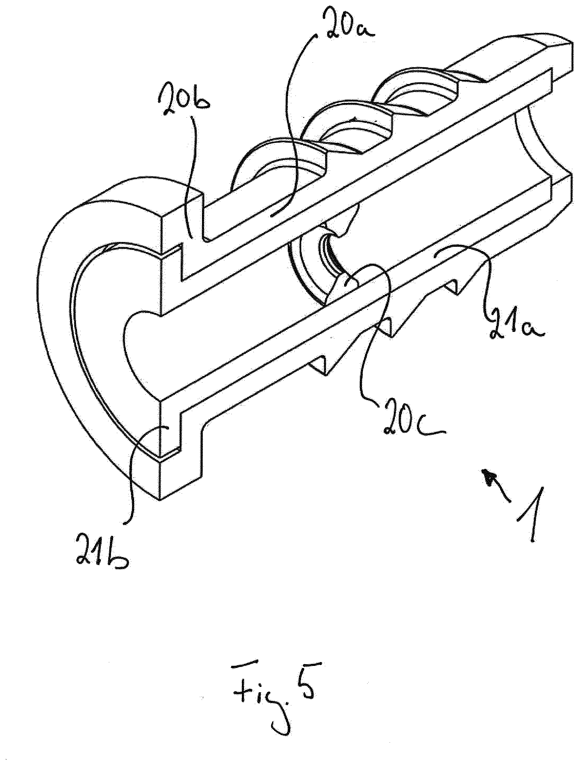

Bei einer bevorzugten Ausführungsform sind das Dichtelement und das Stützelement einstückig miteinander ausgebildet, sind sie also nicht zerstörungsfrei voneinander trennbar. Das Stützelement kann bspw. auch nur mit einem Teil des Dichtelements einstückig sein, mit einem anderen Teil jedoch zusammengesetzt sein. Es kann insbesondere eine innenseitig in dem Stützelement, insbesondere der hülsenförmigen Stützstruktur angeordnete Dichtung einstückig mit dem Stützelement sein; mit dem außerhalb angeordneten Teil des Dichtelements kann das Stützelement dann auch mehrstückig, also zusammengesetzt sein, vgl. Fig. 5 zur Illustration. Andererseits kann aber auch ein im Gesamten mit dem Stützelement einstückiges Dichtelement bevorzugt sein. Bevorzugt sind die miteinander einstückigen Teile als Mehrkomponenten-Spritzgussteil vorgesehen, wird also das Stützelement als Hartkomponente und das Dichtelement als Weichkomponente gespritzt, bevorzugt ist die Weich- an die Hartkomponente angespritzt. Es kann aber bspw. aber auch ein aus Metall vorgesehenes Stützelement als Einlegeteil mit dem Elastomermaterial des Dichtelements umspritzt werden.

Bei einer alternativen Ausführungsform sind das Dichtelement und das Stützelement mehrstückig zueinander, sind sie also als zuvor jeweils im Gesamten für sich hergestellte Teile zusammengesetzt (das Dichtelement ist bevorzugt für sich einstückig und das Stützelement ist bevorzugt für sich einstückig). Bevorzugt ist das Dichtelement insbesondere im Bereich des Hülsenabschnitts mit einer sich axial und umlaufend erstreckenden Tasche vorgesehen, in welche die Stützstruktur eingeschoben ist. Die Stützstruktur kann hierbei aus einem Hartkunststoff oder auch als Metallteil vorgesehen sein. Das Dichtelement kann bspw. als Gummiformteil hergestellt werden, wobei die Tasche bereits bei der formenden Herstellung freigehalten werden kann oder auch nachträglich eingeschnitten werden kann.

Generell wird die hülsenförmige Stützstruktur von dem Hülsenabschnitt des Dichtelements in bevorzugter Ausgestaltung sowohl nach radial außen als auch nach radial innen eingefasst. Der radial außerhalb der Stützstruktur befindliche Teil des Dichtelements wird dann zwischen Laibung und Stützstruktur komprimiert. Der radial innerhalb der Stützstruktur befindliche Teil bleibt hiervon unbeeinträchtigt, kann also reproduzierbar zur Abdichtung gegen die Leitung genutzt werden. Letzteres ist zwar bevorzugt, im Allgemeinen aber gleichwohl nicht zwingend, die Abdichtung zur Leitung hin könnte nämlich bspw. auch außerhalb des Hülsenabschnitts hergestellt werden, etwa in dem Flanschabschnitt (siehe vorne). Bevorzugt dichtet das Dichtelement jedoch zumindest auch im Bereich des Hülsenabschnitts zur Leitung hin.

Generell erstreckt sich die Stützstruktur bevorzugt über mindestens 2/3, weiter bevorzugt mindestens 5/6 der axialen Länge des Hülsenabschnitts (mit möglichen Obergrenzen bei höchstens 19/20 bzw. 9/10). Bei eingesetztem Stopfen erstreckt sich die Stützstruktur bevorzugt nicht axial über den Hülsenabschnitt hinaus in die Öffnung hinein; vorzugsweise deckt der Hülsenabschnitt die Stützstruktur axial in die Öffnung hinein ab; insbesondere eine eben genannte Tasche mündet also nicht zu dem in die Öffnung eingeschobenen Ende des Hülsenabschnitts hin, sondern zum entgegengesetzten Ende.

Generell hat der Hülsenabschnitt bevorzugt in axialer Richtung eine größere Erstreckung als in radialer Richtung, kann die axiale Länge nämlich bspw. mindestens dem 1,5-, 2- bzw. 2,5-fachen des Außendurchmessers betragen (im Falle eines variierenden Außendurchmessers wird der über die axiale Erstreckung kleinste Außendurchmesser betrachtet, bleiben also etwaige Erhebungen außer Betracht). Mögliche Obergrenzen können bspw. bei höchstens dem 6- bzw. 5-fachen liegen. In absoluten Werten kann der Hülsenabschnitt bspw. eine Länge von mindestens 20 mm haben, wobei mindestens 30 mm bevorzugt sind; mögliche Obergrenzen können bspw. bei höchstens 100 mm bzw. 80 mm liegen.

Bei einer bevorzugten Ausführungsform, die auch unabhängig vom Vorhandensein eines hauptanspruchsgemäßen Stützelements als Erfindung betrachtet wird und offenbart sein soll, ist eine Innenwandfläche des Dichtelements mit einer umlaufenden Erhebung geformt. Im Bereich dieser Erhebung tritt die Innenwandfläche nach radial innen hervor, die Erhebung erstreckt sich bevorzugt vollständig umlaufend und in sich geschlossen. Hinsichtlich ihrer axialen Position ist die Erhebung bevorzugt im Bereich des Hülsenabschnitts angeordnet. Wird dann die Leitung durch das Loch hindurchgefädelt, legt sich die Erhebung dichtend an die Außenwandfläche der Leitung an.

Bei einer bevorzugten Ausführungsform ist in dem Loch ein Blindverschluss angeordnet, der monolithisch mit dem übrigen Dichtelement ausgebildet ist (aus demselben durchgehenden Material gebildet). Dieser Blindverschluss, der bevorzugt in Form einer sich senkrecht zur Längsachse erstreckenden Trennwand vorgesehen ist, wird dann vor bzw. beim Einschieben der Leitung geöffnet. Dies kann bspw. mit einem Werkzeug, etwa einem Schraubendreher, vorab erfolgen, bevorzugt wird der Blindverschluss mit der Leitung selbst aufgestoßen.

In bevorzugter Ausgestaltung ist der Blindverschluss im Bereich der Erhebung an der Innenwandfläche des Dichtelements angeordnet, also dort, wo das Loch aufgrund der Erhebung verjüngt ist. Dies kann bspw. insoweit von Vorteil sein, als die Leitung beim Einschieben dann aufgrund der Verjüngung gewissermaßen selbstzentriert auf den Blindverschluss hin geführt wird.

In bevorzugter Ausgestaltung ist die Leitung ein Kabel, insbesondere ein Glasfaserkabel. Aufgrund dessen Empfindlichkeit kommen einerseits die erfindungsgemäßen Vorteile der Stützfunktion im Besonderen zu tragen. Andererseits ist der vorliegende Stopfen auch speziell hinsichtlich der kleinen Öffnungsdurchmesser von Vorteil, die sich im Zusammenhang mit dem Durchführen von Kabeln ergeben können. Das bzw. die Kabel haben für sich einen verhältnismäßig kleinen Außendurchmesser, und es kann dann durch Verwendung des Stopfens auch die Öffnung in der Wand mit einem relativ kleinen Durchmesser gefasst werden. Wollte man das bzw. die Kabel hingegen bspw. mit einem Schaum- oder Vergussmaterial in der Öffnung dichten, müsste diese deutlich größer vorgesehen werden, damit dieses Schaum- bzw. Vergussmaterial zuverlässig eingebracht werden kann, was Zusatzaufwand bedeutet und ästhetisch nachteilig sein kann.

In bevorzugter Ausgestaltung ist die Öffnung ein Bohrloch in einer Wand, insbesondere in einer Gebäudewand, bevorzugt einer Gebäudeaußenwand. Durch den Stopfen hindurch erstreckt sich die Leitung dann also von der Gebäudeaußen- zur Gebäudeinnenseite. Das Verlegen einer Leitung durch eine einfache Bohrung hindurch kann einerseits ökonomisch interessant sein, andererseits können sich aber bspw. aufgrund von Ausbrüchen (Lunkern) Herausforderungen hinsichtlich der Abdichtung ergeben. Auch in dieser Hinsicht kommen die Vorteile der Stützstruktur zu tragen, die auch bei einer ungleichmäßigen Bohrung das Dichtelement hinreichend nach außen andrückt.

Bei einer bevorzugten Ausführungsform hat die Öffnung einen Durchmesser von höchstens 50 mm, weiter und besonders bevorzugt höchstens 40 mm bzw. 30 mm. Mögliche Untergrenzen liegen (davon unabhängig) bspw. bei mindestens 10 mm bzw. 20 mm. Der Außendurchmesser der Leitung liegt bevorzugt bei weniger als 15 mm bzw. 10 mm, mit einer möglichen (davon unabhängigen) Untergrenze bei mindestens 5 mm. Ein typisches Glasfaserkabel kann bspw. einen Außendurchmesser von rund 7 mm haben. Diese Durchmesserverhältnisse illustrieren nochmals, dass mit dem Erfindungsgegenstand nur vergleichsweise kleine Löcher gebohrt werden müssen, weil eben kein Verguss- bzw. Schaummaterial in die Öffnung injiziert oder eingestrichen werden muss.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können.

Im Einzelnen zeigt:
- Fig. 1: einen erfindungsgemäßen Stopfen in einer Seitenansicht;
- Fig. 2: den Stopfen gemäß Fig. 1 in einem Axialschnitt;
- Fig. 3: den Stopfen gemäß den Fig. 1 und 2 in einer Schrägansicht;
- Fig. 4: zu der Darstellung gemäß Fig. 3 einen Schnitt;
- Fig. 5: einen weiteren erfindungsgemäßen Stopfen in einer geschnittenen Schrägansicht.

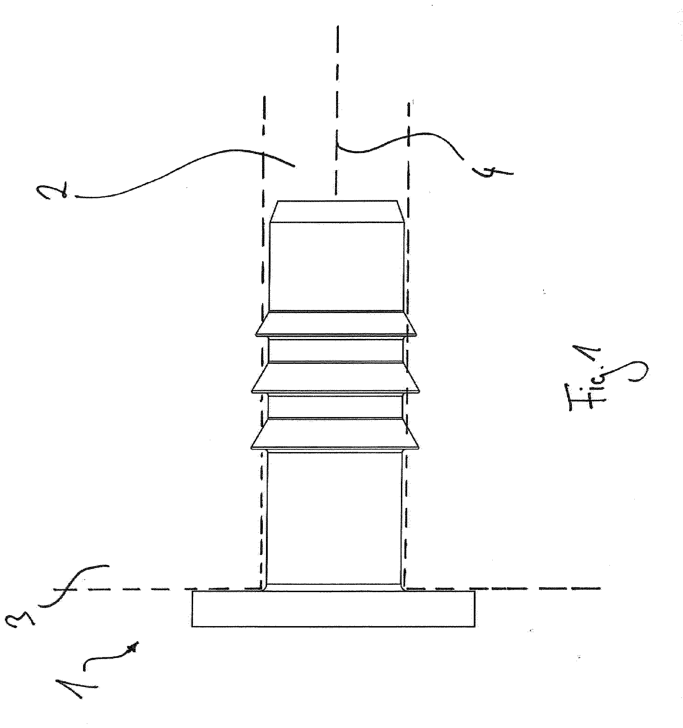

Fig. 1 zeigt einen erfindungsgemäßen Stopfen 1 in einer Seitenansicht. Der Stopfen 1 ist in eine Öffnung 2, konkret ein Bohrloch, in einer Gebäudewand 3 eingeschoben. Die Wand 3 ist in Fig. 1 nur skizzenhaft angedeutet, ferner ist eine Längsachse 4 der Öffnung 2 kenntlich gemacht.

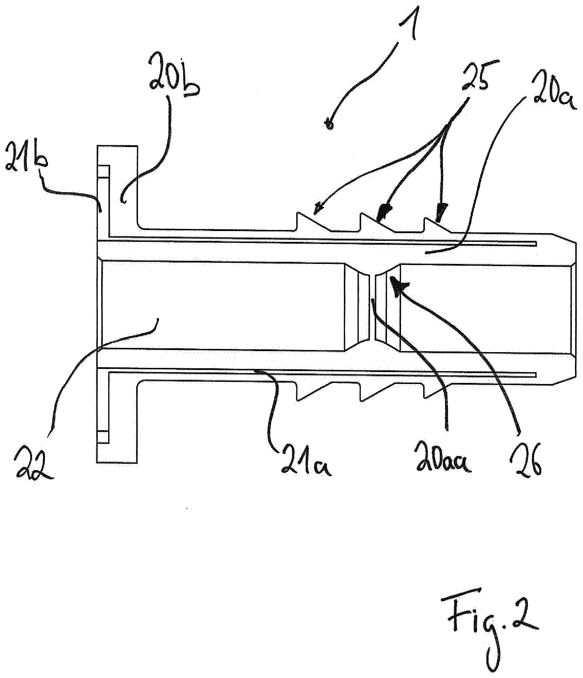

Der Aufbau des Stopfens 1 erschließt sich insbesondere aus dem Axialschnitt gemäß Fig. 2. Der Stopfen 1 weist zum einen ein Dichtelement 20 und zum anderen ein Stützelement 21 auf. Das Stützelement 21 ist vorliegend aus einem Hartkunststoff (ABS) vorgesehen, das Dichtelement 22 hingegen aus einem im Vergleich dazu weicheren Elastomermaterial (TPE). Die beiden sind als ZweiKomponenten-Spritzgussteil hergestellt. Alternativ dazu könnte das Stützelement 21 jedoch auch aus Metall vorgesehen sein und entweder als Einlegeteil mit dem Elastomermaterial umspritzt oder in ein zuvor hergestelltes Dichtelement eingeschoben werden.

Das Dichtelement 20 weist einen Hülsenabschnitt 20a und axial daran anschließend einen Flansch 20b auf. In der Montageposition ist der Hülsenabschnitt 20a in der Öffnung 2 angeordnet, der Flansch 20b liegt außerhalb davon an der Seitenfläche der Wand 3 an. Auch das Stützelement 21 gliedert sich in eine hülsenförmige Stützstruktur 21a und einen Flansch 21b, wobei Erstere in dem Hülsenabschnitt 20a angeordnet ist und diesen stabilisiert. Die Stützstruktur 21a sorgt einerseits dafür, dass der radial außerhalb davon befindliche Teil des Hülsenabschnitts 20a zuverlässig gegen die Laibung des Bohrlochs gedrückt wird. Zur Unterstützung dieser Verankerungsfunktion ist die Außenwandfläche des Dichtelements 20 mit mehreren Erhebungen 25 geformt. Diese bilden ein Sägezahnprofil und haben einen in Einschieberichtung, also in Fig. 2 von links nach rechts, abnehmenden Außendurchmesser. Dies schafft zusammen mit dem Andrücken durch die Stützstruktur 21 eine zuverlässige Verankerung in der Öffnung 2. Andererseits ist die Stützstruktur 21a auch insoweit von Vorteil, als sie die Verformung des Dichtelements 20a nach radial innen begrenzt, also ein übermäßiges Zusammenquetschen und damit Verschließen des Lochs 22 verhindert. Es kann vorteilhafterweise auch dann eine Leitung hindurchgeführt werden, wenn der Stopfen 1 bereits in die Öffnung eingesetzt ist. Auch an der Innenwandfläche des Dichtelements ist eine Erhebung 26 vorgesehen, diese legt sich dann zuverlässig an die Außenwandfläche der hindurchgeführten Leitung an. Im Bereich dieser Erhebung 26 ist ein Blindverschluss 20aa ausgebildet, der beim Hindurchführen der Leitung aufgestoßen wird.

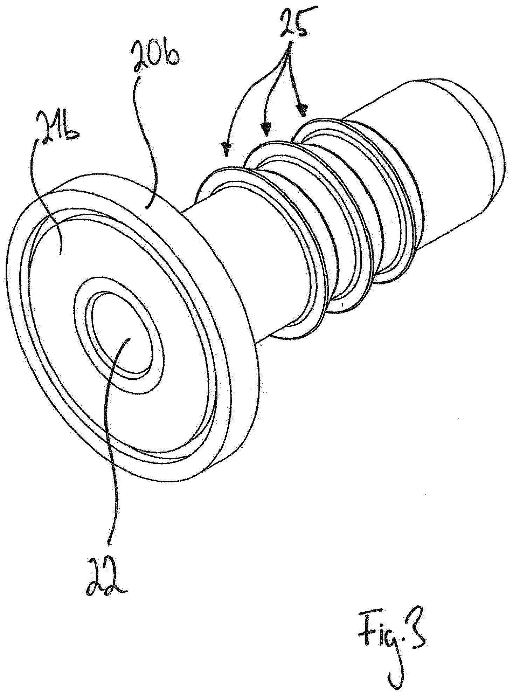

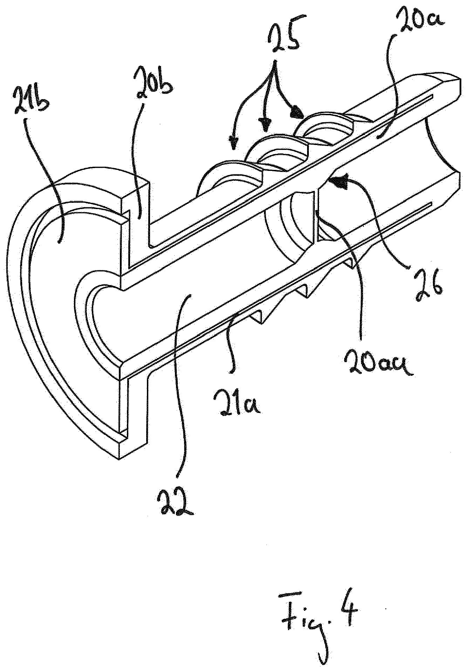

Die Fig. 3 und 4 zeigen denselben Stopfen 1 in einer Schrägansicht, aus einer ähnlichen Perspektive sieht der Monteur den Stopfen 1 bei der Montage. Er kann nach dem Einbringen der Bohrung den Stopfen 1 vorteilhafterweise einem Nagel vergleichbar in die Öffnung einschlagen. Auch hierbei stabilisiert die Stützstruktur 21a den Stopfen 1, zudem bietet der Flansch 21b eine Schlagfläche, auf die bspw. mit einem Hammer geschlagen werden kann.

Fig. 5 zeigt einen weiteren erfindungsgemäßen Stopfen 1, und zwar in einer geschnittenen Schrägansicht. Auch dieser Stopfen 1 weist ein Dichtelement 20 und ein Stützelement 21 auf, dieselben Bezugszeichen betreffen Teile mit derselben oder einer vergleichbaren Funktion, und es wird auch auf die vorstehende Beschreibung verwiesen. Die Besonderheit bei der Variante gemäß Fig. 5 liegt darin, dass das Stützelement 21 aus einem Hartkunststoff (ABS) vorgesehen ist, daran jedoch nicht das gesamt Dichtelement 20 angespritzt ist. Es ist lediglich eine innenseitig umlaufende Dichtung 20c an das Stützelement 21 angespritzt, mit dem übrigen Dichtelement (Hülsenabschnitt 20a und Flansch 20 b) ist das Stützelement 21 mehrteilig, es wird in das übrige Dichtelement 20a, b eingeschoben.

## Patentansprüche

1. Verwendung eines Stopfens mit einem Loch (22) zum Einsetzen in eine Öffnung (2) und Hindurchführen einer Leitung durch das Loch (22),
wobei der Stopfen ein Dichtelement (20) aus einem Elastomermaterial aufweist und ein Hülsenabschnitt (20a) des Dichtelements (20) in die Öffnung (2) eingesetzt wird und dann an einer die Öffnung (2) begrenzenden Laibung anliegt,
und wobei der Stopfen ferner ein Stützelement (21) aus einem gegenüber dem Elastomermaterial härteren Stützelementmaterial aufweist,
welches Stützelement (21) eine hülsenförmige Stützstruktur (21a) aufweist, die beim Einsetzen des Stopfens in dem Hülsenabschnitt (20a) angeordnet ist und dessen Verformung nach innen, zu einer Längsachse (4) der Öffnung (2) hin begrenzt,
wobei die hülsenförmige Stützstruktur (21a) das Dichtelement (20) nach radial außen gegen die die Öffnung (2) begrenzende Laibung drückt, **dadurch gekennzeichnet, dass**
das Stützelement (21) einen Flansch (21b) aufweist, der axial an die hülsenförmige Stützstruktur (21a) anschließt und sich davon nach radial außen weg erstreckt.

2. Verwendung nach Anspruch 1, bei welcher zuerst der Stopfen in die Öffnung (2) gesetzt wird und erst danach die Leitung durch das Loch (22) geführt wird.

3. Verwendung nach Anspruch 1 oder 2, bei welcher der Stopfen in die Öffnung (2) eingeschlagen wird.

4. Verwendung nach einem der vorstehenden Ansprühe, bei welcher der Hülsenabschnitt (20a) des Dichtelements (20) zumindest abschnittsweise einen Außendurchmesser hat, der größer als ein Durchmesser der Öffnung (2) ist.

5. Verwendung nach einem der vorstehenden Ansprüche, bei welcher eine der Innenwandfläche radial entgegengesetzte Außenwandfläche des Dichtelements (20) in dem Hülsenabschnitt (20a) mit einer umlaufenden, gegenüber der übrigen Außenwandfläche nach radial außen hervortretenden Erhebung (25) geformt ist.

6. Verwendung nach einem der vorstehenden Ansprüche, bei welcher das Dichtelement (20) und das Stützelement (21) miteinander einstückig ausgebildet sind, insbesondere als Mehrkomponenten-Spritzgussteil vorgesehen sind.

7. Verwendung nach einem der Ansprüche 1 bis 5, bei welcher das Dichtelement (20) und das Stützelement (21) zueinander mehrstückig vorgesehen sind, nämlich das Dichtelement (20) mit einer sich axial und umlaufend erstreckenden Tasche vorgesehen ist, in welche die hülsenförmige Stützstruktur (21a) eingeschoben ist.

8. Verwendung nach einem der vorstehenden Ansprüche, bei welcher die hülsenförmige Stützstruktur (21a) von dem Hülsenabschnitt (20a) des Dichtelements (20) nach radial innen und radial außen eingefasst wird.

9. Verwendung nach einem der vorstehenden Ansprüche, bei welcher eine das Loch (22) radial begrenzende Innenwandfläche des Dichtelements (20) mit einer umlaufenden, gegenüber der übrigen Innenwandfläche nach radial innen hervortretenden Erhebung (26) geformt ist.

10. Verwendung nach einem der vorstehenden Ansprüche, bei welcher das Dichtelement (20) einen monolithisch mit dem übrigen Dichtelement (20) ausgebildeten, in dem Loch (22) angeordneten Blindverschluss (20aa) aufweist.

11. Verwendung nach Anspruch 10 in Verbindung mit Anspruch 9, bei welcher der Blindverschluss (20aa) im Bereich der Erhebung (26) angeordnet ist.

12. Verwendung nach einem der vorstehenden Ansprüche, bei welcher die Leitung ein Kabel ist, insbesondere ein Glasfaserkabel.

13. Verwendung nach einem der vorstehenden Ansprüche, bei welcher die Öffnung (2) ein Bohrloch in einer Wand (3) ist, insbesondere in einer Gebäudewand.

14. Verwendung nach einem der vorstehenden Ansprüche, bei welcher die Öffnung (2) einen Durchmesser von höchstens 30 mm hat.

## Claims

1. A use of a plug having a hole (22), for inserting into an opening (2) and leading through a line through the hole (22),
wherein the plug comprises a seal element (20) made of an elastomer material, a sleeve section (20a) of the seal element (20) being inserted into the opening (2) and contacting a soffit defining the opening (2), then,
and wherein the plug further comprises a support element (21) made of a support element material harder than the elastomer material,
the support element (21) comprising a sleeve-shaped support structure (21a) which is arranged in the sleeve section (20a) when the plug is inserted and limits the deformation of the latter inwards, towards a length axis (4) of the opening (2),
wherein the sleeve-shaped support structure (21a) presses the seal element (20) radially outwards against the soffit defining the opening (2), **characterised in that**
the support element (21) comprises a flange (21b) axially adjacent to the sleeve-shaped support structure (21a), which extends radially outwards from the latter.

2. The use of claim 1, wherein the plug is inserted into the opening (2) first and the line is lead through the hole (22) thereafter.

3. The use of claim 1 or 2, wherein the plug is inserted into the opening (2) by striking.

4. The use of any of the preceding claims, wherein the sleeve section (20a) of the seal element (20) has at least in a portion an outer diameter larger than a diameter of the opening (2).

5. The use of any of the preceding claims, wherein an outer wall surface of the seal element (20), radially opposite to the inner wall surface, is formed with a protrusion (25) in the sleeve section (20a), which extends circumferentially and protrudes with respect to the remaining outer wall surface.

6. The use of any of the preceding claims, wherein the seal element (20) and the support element (21) are one-piece with each other, in particular formed as a multi-component injection moulding part.

7. The use of any of claims 1 to 5, wherein the seal element (20) and the support element (21) are multi-piece with respect to each other, the seal element (20) being provided with a pocket extending axially and circumferentially, into which the sleeve-shaped support structure (21a) is pushed.

8. The use of any of the preceding claims, wherein the sleeve-shaped support structure (21a) is embraced by the sleeve section (20a) of the seal element (20) radially inwards and radially outwards.

9. The use of any of the preceding claims, wherein an inner wall surface of the seal element (20), which defines the hole (22) radially, is formed with a protrusion (26) protruding with respect to the remaining inner wall surface radially inwards.

10. The use of any of the preceding claims, wherein the seal element (20) is formed with a blind closure (20aa) monolithic with the remaining seal element (20) and arranged in the hole (22).

11. The use of claim 10 in combination with claim 9, wherein the blind closure (20aa) is arranged where the protrusion (26) is arranged.

12. The use of any of the preceding claims, wherein the line is a cable, in particular a glass-fibre cable.

13. The use of any of the preceding claims, wherein the opening (2) is a bore in a wall (3), in particular in a building wall.

14. The use of any of the preceding claims, wherein the opening (2) has a diameter of 30 mm at maximum.

## Revendications

1. Utilisation d'un bouchon comportant un trou (22), destiné à être introduit dans une ouverture (2) et à faire passer une conduite par ledit trou (22),
ledit bouchon présentant un élément d'étanchéité (20) en un matériau élastomère, une partie en forme de douille (20a) de l'élément d'étanchéité (20) étant introduite dans l'ouverture (2) et venant ensuite en appui contre un intrados délimitant ladite ouverture (2),
et ledit bouchon présentant en outre un élément de renfort (21) en un matériau plus dur que ledit matériau élastomère,
ledit élément de renfort (21) présentant une structure de renfort en forme de douille (21a) qui se trouve dans la partie en forme de douille (20a) lors de l'introduction du bouchon et qui limite la déformation de ce dernier vers l'intérieur vis-à-vis d'un axe longitudinal (4) de l'ouverture (2),
ladite structure de renfort en forme de douille (21a) pressant l'élément d'étanchéité (20) radialement vers l'extérieur contre l'intrados délimitant l'ouverture (2),
**caractérisée en ce que**
l'élément de renfort (21) présente une bride (21b) axialement contiguë à la structure de renfort en forme de douille (21a) et s'étendant radialement vers l'extérieur à partir de celle-ci.

2. Utilisation selon la revendication 1, dans laquelle le bouchon est tout d'abord installé dans l'ouverture (2) et la conduite n'est guidée dans le trou (22) que par la suite.

3. Utilisation selon la revendication 1 ou 2, dans laquelle le bouchon est installé dans l'ouverture (2) grâce à un outil de frappe.

4. Utilisation selon l'une des revendications précédentes, dans laquelle la partie en forme de douille (20a) de l'élément d'étanchéité (20) présente un diamètre extérieur qui, au moins par sections, est supérieur au diamètre de l'ouverture (2).

5. Utilisation selon l'une des revendications précédentes, dans laquelle une surface de paroi extérieure de l'élément d'étanchéité (20), qui est radialement opposée à la surface de paroi intérieure, présente la formation, dans la partie en forme de douille (20a), d'un relief (25) circonférentiel dirigé radialement vers l'extérieur par rapport au reste de la surface de paroi extérieure.

6. Utilisation selon l'une des revendications précédentes, dans laquelle l'élément d'étanchéité (20) et l'élément de renfort (21) sont conçus d'un seul tenant l'un avec l'autre, notamment sous la forme d'une pièce moulée par injection à plusieurs composants.

7. Utilisation selon l'une des revendications 1 à 5, dans laquelle l'élément d'étanchéité (20) et l'élément de renfort (21) sont de conception distincte l'un par rapport à l'autre, à savoir que l'élément d'étanchéité (20) est pourvu d'une poche à étendue axiale et circonférentielle dans laquelle est insérée la structure de renfort en forme de douille (21a).

8. Utilisation selon l'une des revendications précédentes, dans laquelle la structure de renfort en forme de douille (21a) est cerclée, radialement vers l'intérieur et radialement vers l'extérieur, par la partie en forme de douille (20a) de l'élément d'étanchéité (20).

9. Utilisation selon l'une des revendications précédentes, dans laquelle une surface de paroi intérieure de l'élément d'étanchéité (20) délimitant radialement le trou (22) présente la formation d'un relief (26) circonférentiel dirigé radialement vers l'intérieur par rapport au reste de la surface de paroi intérieure.

10. Utilisation selon l'une des revendications précédentes, dans laquelle l'élément d'étanchéité (20) présente, dans le trou (22), un opercule (20aa) de conception monolithique avec le reste de l'élément d'étanchéité (20).

11. Utilisation selon la revendication 10 prise conjointement à la revendication 9, dans laquelle l'opercule (20aa) est situé au droit du relief (26).

12. Utilisation selon l'une des revendications précédentes, dans laquelle la conduite est un câble, notamment un câble de fibres optiques.

13. Utilisation selon l'une des revendications précédentes, dans laquelle l'ouverture (2) est un trou percé dans une paroi (3), notamment dans une paroi de bâtiment.

14. Utilisation selon l'une des revendications précédentes, dans laquelle l'ouverture (2) présente un diamètre ne dépassant pas 30 mm.
